(19) Europäisches Patentamt
European Patent Office
Office européen des brevets

(11) **EP 4 485 616 B1**

(12) **EUROPEAN PATENT SPECIFICATION**

(45) Date of publication and mention
of the grant of the patent:
**04.02.2026 Bulletin 2026/06**

(21) Application number: **24175317.7**

(22) Date of filing: **13.05.2024**

(51) International Patent Classification (IPC):
*H01M 10/44* (2006.01)     *H01M 10/48* (2006.01)
*H01M 50/213* (2021.01)    *H01M 10/42* (2006.01)

(52) Cooperative Patent Classification (CPC):
**H01M 10/443; H01M 10/482; H01M 10/486;
H01M 50/213;** H01M 10/6235; H01M 2010/4271;
H01M 2220/30; H02J 7/007194; Y02E 60/10

(54) **BATTERY PACK**

BATTERIEPACK

BLOC-BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.06.2023 CN 202310792911**

(43) Date of publication of application:
**01.01.2025 Bulletin 2025/01**

(73) Proprietor: **Nanjing Chervon Industry Co., Ltd.
Nanjing, Jiangsu 211106 (CN)**

(72) Inventors:
• **YUAN, Yongjie**
**Nanjing (CN)**

• **JI, Yongchao**
**Nanjing (CN)**
• **WANG, Hongwei**
**Nanjing (CN)**
• **LIU, Weixuan**
**Nanjing (CN)**

(74) Representative: **Sun, Yiming
HUASUN Patent- und Rechtsanwälte
Friedrichstraße 33
80801 München (DE)**

(56) References cited:
**CN-A- 114 788 068     US-A1- 2022 374 568**

## Description

## TECHNICAL FIELD

The present application relates to the field of battery control technologies and, in particular, to a battery pack, a power tool, and a control method of a battery pack.

## BACKGROUND

A battery pack, as a power source, exists in a power tool and can effectively improve the battery life and portability of the power tool. However, a temperature change of the battery pack in a working process may produce a significant effect on the performance and security of the power tool. Therefore, it is necessary to detect a temperature of the battery pack. Although a temperature collected by a sensor on a battery pack housing may be directly used as the temperature of the battery pack, the temperature measurement data obtained in this way is excessively rough, and both the comprehensiveness and accuracy of the temperature measurement data need to be improved.

This part provides background information related to the present application, which is not necessarily the existing art. Prior art documents CN 114 788 068 and US 2022/374568 disclose experimental and theoretical assessment of battery pack temperature.

## SUMMARY

An object of the present application is to solve or at least alleviate part or all of the preceding problems. Therefore, an object of the present application is to provide a battery pack, a power tool, and a control method of a battery pack.

To achieve the preceding object, the present application adopts the technical solutions described below.

A battery pack includes: a battery pack housing; a cell group including multiple cells and accommodated in the battery pack housing; and a monitoring device configured to monitor an ambient temperature at one temperature measurement point or an ambient temperature at each of multiple temperature measurement points in the battery pack housing. A cell includes multiple cell layers, the battery pack further includes a controller configured to control a charging process of the battery pack or a discharging process of the battery pack, the monitoring device is further configured to transmit the monitored ambient temperature to the controller, and the controller is further configured to determine a cell layer temperature of a target cell layer among the multiple cell layers based on at least one ambient temperature and control, based on the cell layer temperature of the target cell layer, the battery pack to be charged or discharge electricity.

In some examples, the controller is configured to determine the cell layer temperature of the target cell layer based on the at least one ambient temperature and at least one of a material parameter of the cell group, a structural parameter of the cell group, an electrical parameter of each cell layer, or the environment heat transfer coefficient of each temperature measurement point.

In some examples, the material parameter of the cell group includes one or more of: the specific heat capacity of a cell or the heat transfer coefficient between cell layers.

In some examples, the structural parameter of the cell group includes one or more of: the weight of each cell layer, the area of each cell layer, or the thickness of each cell layer.

In some examples, the electrical parameter of each cell layer includes one or more of: a cell voltage or a current between cell layers.

In some examples, the temperature measurement point or the multiple temperature measurement points are at one or more of: the outer surface of any one of the multiple cells, the inner surface of the battery pack housing, a cell bracket, and a cell connector.

In some examples, the controller is configured to determine the cell layer temperature of the target cell layer based on the ambient temperature at the temperature measurement point and the environment heat transfer coefficient of the temperature measurement point.

In some examples, the controller is configured to: separately determine, based on an ambient temperature at each of the multiple temperature measurement points and the environment heat transfer coefficient of each of the multiple temperature measurement points, a respective reference cell layer temperature of the target cell layer which corresponds to each of the multiple temperature measurement points: and determine the cell layer temperature of the target cell layer based on reference cell layer temperatures which are in one-to-one correspondence with all of the multiple temperature measurement points.

In some examples, the controller is configured to: separately determine, based on an ambient temperature at each of the multiple temperature measurement points, a respective reference cell layer temperature of the target cell layer which corresponds to each of the multiple temperature measurement points: and determine the cell layer temperature of the target cell layer based on preset weights of all of the multiple temperature measurement points and reference cell layer temperatures at all of the multiple temperature measurement points through weighted summation.

In some examples, the controller is further configured to determine a cell layer temperature of each cell layer in the cell based on the at least one ambient temperature.

In some examples, the controller is configured to: in the case where the cell layer temperature of the target cell layer is higher than or equal to a preset temperature threshold, control the battery pack to cease to be charged or discharge the electricity.

In some examples, the controller is configured to: in the case where the cell layer temperature of the target cell layer is higher than or equal to a preset temperature threshold, control the battery pack to be charged or discharge the electricity within a preset power threshold.

In some examples, the cell is a wound cell.

In some examples, the target cell layer is the innermost cell layer of the wound cell, and the controller is configured to: in the case where the cell layer temperature of the innermost cell layer of the wound cell is higher than or equal to a preset temperature threshold, control the battery pack to be charged or discharge the electricity within a preset power threshold.

In some examples, the controller is further configured to determine a working condition of the cell based on the cell layer temperature of the target cell layer.

A power tool includes: a tool body; and a battery pack configured to supply power to at least the tool body. The battery pack includes: a battery pack housing; a cell group including multiple cells and accommodated in the battery pack housing; and a monitoring device configured to monitor an ambient temperature at one temperature measurement point or an ambient temperature at each of multiple temperature measurement points in the battery pack housing. A cell includes multiple cell layers, the battery pack further includes a controller configured to control a charging process of the battery pack or a discharging process of the battery pack, the monitoring device is further configured to transmit the monitored ambient temperature to the controller, and the controller is further configured to determine a cell layer temperature of a target cell layer among the multiple cell layers based on at least one ambient temperature and control, based on the cell layer temperature of the target cell layer, the battery pack to be charged or discharge electricity.

In some examples, the controller is configured to determine the cell layer temperature of the target cell layer based on the at least one ambient temperature and at least one of a material parameter of the cell group, a structural parameter of the cell group, an electrical parameter of each cell layer, or the environment heat transfer coefficient of each temperature measurement point.

In some examples, the controller is configured to determine a cell layer temperature of the innermost cell layer of the wound cell based on an ambient temperature at at least one temperature measurement point and the environment heat transfer coefficient of the at least one temperature measurement point.

A control method of a battery pack includes: monitoring an ambient temperature at one temperature measurement point or an ambient temperature at each of multiple temperature measurement points in a battery pack housing; determining a cell layer temperature of a target cell layer among multiple cell layers in a cell based on at least one ambient temperature; and controlling, based on the cell layer temperature of the target cell layer, the battery pack to be charged or discharge electricity.

The benefits of the present application are as follows: for the cell in the battery pack constituted by the multiple cell layers, the cell layer temperature of the target cell layer in the cell can be deduced from an ambient temperature at any temperature measurement point in the battery pack housing and then the charging and discharging of the battery pack can be controlled based on the cell layer temperature so that the obtained temperature measurement data is more accurate and comprehensive and the charging and discharging of the battery pack are controlled more precisely, thereby improving the work efficiency and service life of the battery pack and the work efficiency and service life of a power tool equipped with the battery pack.

## BRIEF DESCRIPTION OF DRAWINGS

FIG. 1 is a perspective view of a power tool as an example;
FIG. 2 is a perspective view of a battery pack in the power tool shown in FIG. 1;
FIG. 3 is a perspective view of a cell group in the battery pack shown in FIG. 2;
FIG. 4 is a perspective view showing all cell layers in a cell shown in FIG. 3;
FIG. 5 is a perspective view showing one cell layer in the cell shown in FIG. 4;
FIG. 6 is a schematic diagram of the electrical control of a controller in the battery pack shown in FIG. 2; and
FIG. 7 is a flowchart of a control method of a battery pack as an example.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

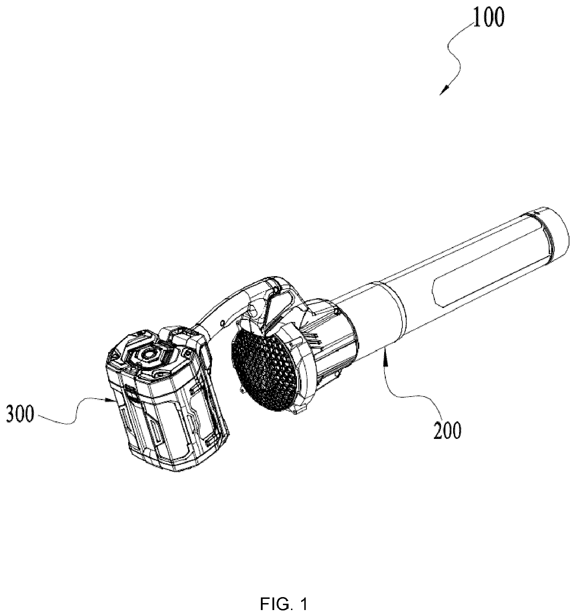

FIG. 1 shows a power tool 100 as an example in the present application. The power tool 100 includes a tool body 200 and a battery pack 300. As shown in FIG. 1, the tool body 200 may be a garden blower. It is to be understood that the tool body 200 may be other types of power tools such as sawing tools and drilling tools. A specific type of power tool to which the tool body belongs is not limited.

The battery pack 300 is detachably connected to the tool body 200. Specifically, the tool body 200 may be provided with a battery pack connecting portion, the battery pack 300 may be provided with a battery pack mounting portion, and the battery pack connecting portion and the battery pack mounting portion mate with each other so that the detachable connection between the battery back 300 and the tool body 200 can be implemented. The battery pack 300 is configured to supply power to at least the tool body 200. When the battery pack 300 is connected to the tool body 200, the battery pack 300 and the tool body 200 may form a loop through which electricity can be discharged from the battery pack 300 to the tool body 200. After the battery pack 300 is detached from the tool body 200, the battery pack 300 may be charged by another external power supply device.

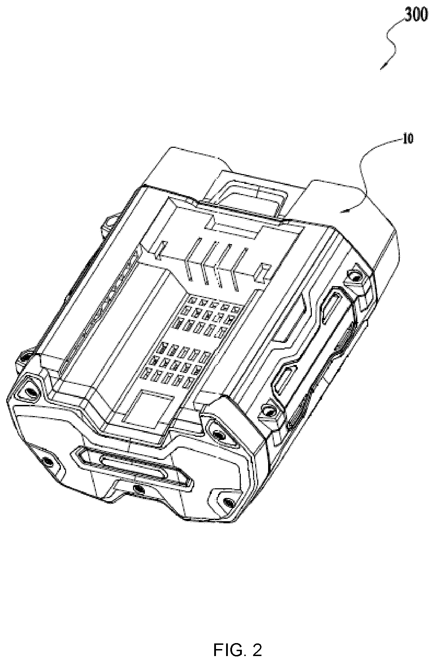

FIG. 2 shows the battery pack 300 as an example in the present application. The battery pack 300 includes a battery pack housing 10, a cell group 20, a monitoring device 30, and a controller 40.

A relatively closed accommodating space is formed in the battery pack housing 10 and can accommodate at least the cell group 20, the monitoring device 30, and the controller 40 so that a security risk caused by a user directly touching the cell group 20, the monitoring device 30, and the controller 40 is avoided.

The cell group 20 is an electrical energy container that actually stores and outputs energy in the battery pack. The cell group 20 stores or outputs electrical energy through mutual conversion between electrical energy and chemical energy. Specifically, the cell group 20 may implement the mutual conversion between electrical energy and chemical energy by using a compound that includes lithium.

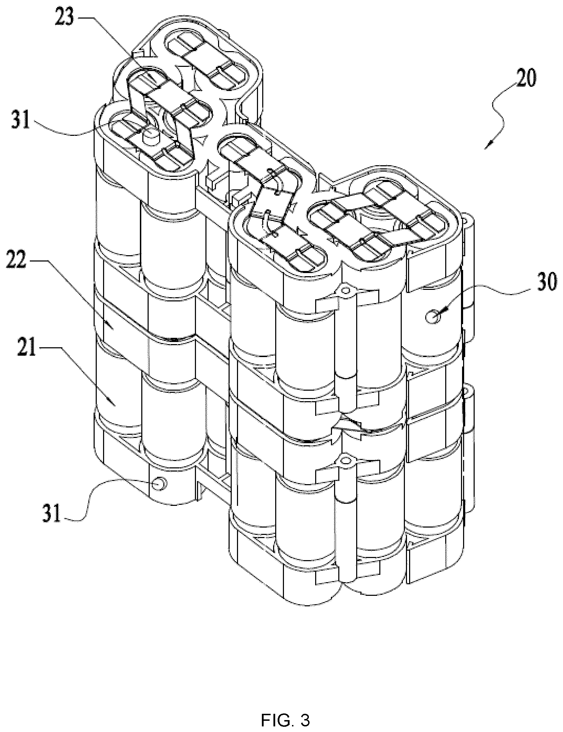

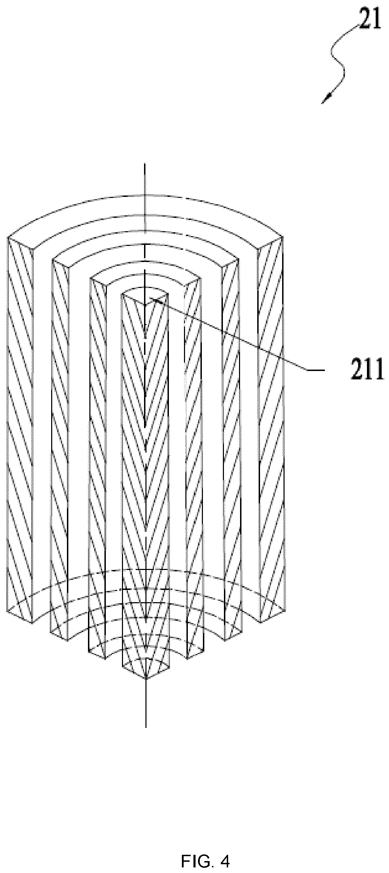

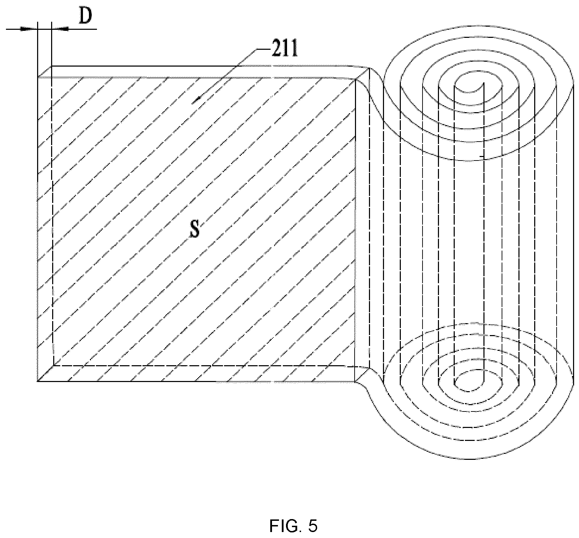

Referring to FIGS. 3 to 5, the cell group 20 includes multiple cells 21, cell brackets 22, and cell connectors 23. Each cell 21 is a container device in which a compound capable of implementing the conversion of electrical energy is encapsulated. The container device can supply some electrical energy and has a positive electrode and a negative electrode that can be physically connected. The multiple cells 21 may constitute a relatively fixed whole through the cell brackets 22. The positive electrodes and negative electrodes of the multiple cells 21 may be connected by the cell connectors 23 so that a power supply device with a total positive electrode and a total negative electrode is formed outward. As shown in FIGS. 4 and 5, the cell 21 may be implemented through the winding process, and each cell 21 may be considered to be constituted by multiple wound cell layers 211. Description will be performed below based on the cell 21 implemented through the winding process. For the clarification of a related content, the innermost cell layer of the wound cell is described as a first cell layer below, and cell layers arranged layer by layer from the first cell layer to the outside are sequentially a second cell layer, a third cell layer, and so on. The details are not repeated. As shown in FIG. 5, one cell layer in the wound cell 21 is shown, where the area of the cell layer is denoted by S, and the thickness of the cell layer is denoted by D.

It is to be understood that the cell 21 may be implemented through another process such as the stacking process. In the case where the cell 21 is implemented through the stacking process, each cell 21 may be considered to be constituted by multiple stacked cell layers 211.

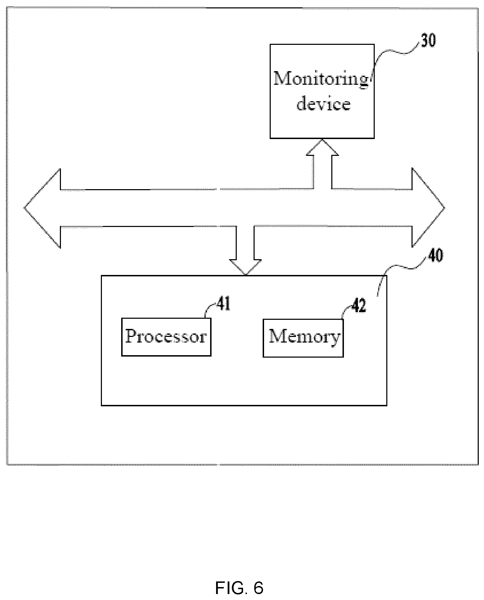

Referring to FIGS. 2 and 6, the monitoring device 30 can monitor an ambient temperature at each temperature measurement point in the battery pack housing 10 and transmits each monitored ambient temperature to the controller 40 that is about to be described below. Specifically, the monitoring device 30 may include multiple sensors 31 near temperature measurement points.

In some examples, correspondence exists between the number and positions of the sensors 31 and the number and positions of the temperature measurement points. One sensor 31 is responsible for monitoring a temperature at one respective temperature measurement point. For example, a sensor 31 may be a temperature sensor. In other examples, no correspondence exists between the number and positions of the sensors 31 and the number and positions of the temperature measurement points. Each sensor 31 may be responsible for monitoring temperatures at several temperature measurement points separately. For example, a sensor 31 may be an infrared sensor and can use an infrared image to obtain temperatures at multiple temperature measurement points in the image through conversion.

The specific number and specific positions of the temperature measurement points disposed in the battery pack housing 10 are not limited and may be determined according to an actual scenario requirement. One or more temperature measurement points may be disposed. The specific position of a temperature measurement point in the battery pack housing 10 includes but is not limited to the outer surface of each cell 21, the inner surface of the battery pack housing 10, a cell bracket 22, a cell connector 23 such as a tab, and the like.

Referring to FIG. 6, the controller 40 includes at least a processor 41 and a memory 42 that stores instructions executable by the processor 41. The processor 41 may read and run the executable instructions in the memory 42 to control the battery pack 300. The battery pack 300 may further include a circuit board. The controller 40 may be disposed on the circuit board, and circuits and terminals that are configured to transmit electrical energy and signals between components are further disposed on the circuit board. Therefore, the processor 41 can receive the ambient temperature from the sensor 31 and read the executable instructions in the memory 42.

The controller 40 may determine a cell layer temperature of the target cell layer among multiple cell layers in the cell 21 based on at least one received ambient temperature.

The target cell layer is a preset cell layer on which temperature detection and control are to be performed. In some examples, a technician may add, delete, and modify, through an interface of the controller 40, target cell layers that have been set. The target cell layer may be any one, any multiple ones, or all of the multiple cell layers in the cell 21. It may be determined according to the actual scenario requirement which cell layer in the cell 21 is specifically the target cell layer. The wound cell is used as an example, and the target cell layer may be the first cell layer, the outermost cell layer, five cell layers from the first cell layer to a fifth cell layer, or the like. When the target cell layer is the first cell layer in the wound cell, the controller 40 may determine a cell layer temperature of the first cell layer so that the controller 40 can control a charging process of the battery pack 300 or a discharging process of the battery pack 300 more precisely based on the cell layer temperature of the first cell layer.

The target cell layer may generally refer to a cell layer in each of all the cells 21 in the cell group 20 of the battery pack 300 or may specifically refer to a cell layer in any cell 21 or each of any multiple cells 21 in the cell group 20. It may be determined according to the actual scenario requirement which cell 21 includes the target cell layer specifically. For example, assuming that all the cells 21 in the cell group 20 are at the same temperature and show the same temperature change, the target cell layer may be a target cell layer in each of all the cells 21. However, assuming that all the cells 21 in the cell group 20 are at different temperatures and show different temperature changes, the target cell layer may be a target cell layer in a particular cell 21.

The at least one ambient temperature may be an ambient temperature at any temperature measurement point, each of any multiple temperature measurement points, or each of all the temperature measurement points. It may be determined according to the actual scenario requirement which temperature measurement point has an ambient temperature which is used as the at least one ambient temperature specifically. In some examples, correspondence may exist between the temperature measurement point and the target cell layer. The cell layer temperature of the target cell layer may be determined with an ambient temperature at one temperature measurement point or each of multiple temperature measurement points closest to the cell to which the target cell layer belongs.

In an example, the controller 40 may determine a cell layer temperature of one target cell layer or cell layer temperatures of multiple target cell layers in each of multiple cells 21 based on one ambient temperature. For example, the controller 40 may determine a cell layer temperature of a first cell layer in each cell 21 or cell layer temperatures of all cell layers in each cell 21 in the cell group 20 based on the ambient temperature.

In an example, the controller 40 may determine a cell layer temperature of one target cell layer or cell layer temperatures of multiple target cell layers in one cell 21 based on one ambient temperature. For example, the controller 40 may determine, based on the ambient temperature, a cell layer temperature of a first cell layer in a cell 21 that is in the cell group 20 and closest to the temperature measurement point or cell layer temperatures of all cell layers in a cell 21 that is in the cell group 20 and closest to the temperature measurement point.

In an example, the controller 40 may determine a cell layer temperature of one target cell layer or cell layer temperatures of multiple target cell layers in each of multiple cells 21 based on multiple ambient temperatures. For example, the controller 40 may separately determine a reference cell layer temperature of the first cell layer in each cell 21 or a reference cell layer temperature of each cell layer in each cell 21 in the cell group 20 based on each ambient temperature so that a respective reference cell layer temperature corresponding to each temperature measurement point is obtained. Then, for example, weighted summation is performed on multiple reference cell layer temperatures such that a cell layer temperature of the first cell layer or a cell layer temperature of each cell layer is obtained. In the weighted summation, a weight of each reference cell layer temperature may be positively correlated with the distance between the temperature measurement point to which each reference cell layer temperature corresponds and the center point of the cell group 20.

In an example, the controller 40 may determine a cell layer temperature of one target cell layer or cell layer temperatures of multiple target cell layers in one cell 21 based on multiple ambient temperatures. For example, the controller 40 may separately determine, based on each ambient temperature, a reference cell layer temperature of a first cell layer in a cell 21 that is in the cell group 20 and closest to multiple temperature measurement points or a reference cell layer temperature of each cell layer in a cell 21 that is in the cell group 20 and closest to multiple temperature measurement points so that a respective reference cell layer temperature corresponding to each temperature measurement point is obtained. The cell 21 closest to the multiple temperature measurement points may have the minimum average of the distances between the cell 21 and the multiple temperature measurement points. Then, for example, the weighted summation is performed on multiple reference cell layer temperatures such that a cell layer temperature of the first cell layer or a cell layer temperature of each cell layer is obtained. In the weighted summation, a weight of each reference cell layer temperature may be positively correlated with the distance between the temperature measurement point to which each reference cell layer temperature corresponds and the cell 21.

In an optional implementation, reference may be made to the specific internal structure of the battery pack 300 and inter-layer heat transfer relationships in the cell 21 and outward environment heat transfer relationships of the cell 21 are considered so that a mathematical model that can express the energy relationship among all the cell layers in the cell 21 is built. The controller 40 may specify a temperature relationship according to the energy relationship by using the preceding mathematical model so that the cell layer temperature of the target cell layer in the cell 21 is obtained. Specifically, an input parameter of the mathematical model may be the ambient temperature at the temperature measurement point, an output parameter may be the cell layer temperature of the target cell layer, and another parameter may be a hyperparameter.

For any cell layer in any cell 21, the energy relationship that may be involved in the model includes but is not limited to: energy consumption of electric heating, energy consumption of a temperature change, energy consumption of heat transfer to an adjacent cell layer, energy consumption of heat transfer to an external environment, and the like. The energy consumption of the electric heating refers to electrical energy consumed by this cell layer in the conversion to heat energy. The energy consumption of the temperature change refers to heat energy consumed by this cell layer in the temperature change of the cell layer. The energy consumption of the heat transfer to the adjacent cell layer refers to heat transferred by this cell layer to an outer cell layer and heat absorbed by this cell layer from an inner cell layer. The energy consumption of the heat transfer to the external environment refers to heat dissipated outward by the outermost cell layer within the range of the battery pack housing 10.

In an example, the controller 40 may determine the cell layer temperature of the target cell layer based on the at least one ambient temperature and at least one of a material parameter of the cell group 20, a structural parameter of the cell group 20, an electrical parameter of each cell layer, or the environment heat transfer coefficient of each temperature measurement point.

The material parameter of the cell group 20 may be used for calculating the energy consumption of a temperature change of each cell layer, the energy consumption of heat transfer of each cell layer to an adjacent cell layer, and the like. The material parameter of the cell group 20 may include one or more of: the specific heat capacity of a cell or the heat transfer coefficient between cell layers. The specific heat capacity of the cell refers to the specific heat capacity of the material of the cell, for example, the specific heat capacity of a compound that is in the cell 21 and includes lithium. The heat transfer coefficient between the cell layers refers to the heat transfer coefficient of the material of the cell, for example, the heat transfer coefficient of the compound that is in the cell 21 and includes lithium. All the cell layers may have the same material parameter, and a related document of the battery pack 300 is consulted or a test is performed so that the preceding material parameter can be obtained.

The structural parameter of the cell group 20 may be used for calculating the energy consumption of the temperature change of each cell layer, the energy consumption of the heat transfer of each cell layer to the adjacent cell layer, the energy consumption of heat transfer of each cell layer to the external environment, and the like. The structural parameter of the cell group 20 may include one or more of: the weight of each cell layer, the area of each cell layer, and the thickness of each cell layer. The weight of each cell layer refers to the weight of each cell layer in the cell 21. The wound cell is used as an example, and the weight of each cell layer includes the weight of a first cell layer, the weight of a second cell layer, and so on until the weight of the outermost cell layer. The area of each cell layer refers to the contact area between each cell layer and the adjacent cell layer in the cell 21. The wound cell is used as an example, and the area of each cell layer includes the area of the first cell layer, the area of the second cell layer, and so on until the area of the outermost cell layer. The contact area between each cell layer and the cell layer to which each cell layer is adjacent inward may be considered to be equal to the contact area between each cell layer and the cell layer to which each cell layer is adjacent outward and is calculated only once. For example, the area of a third cell layer refers to the contact area between the third cell layer and the second cell layer or the contact area between the third cell layer and a fourth cell layer, the area of the first cell layer refers to the contact area between the first cell layer and the second cell layer, and the area of the outermost cell layer refers to the contact area between the outermost cell layer and the second outermost cell layer. The thickness of each cell layer refers to the thickness of each cell layer in the cell 21. The wound cell is used as an example, and the thickness of each cell layer includes the thickness of the first cell layer, the thickness of the second cell layer, and so on until the thickness of the outermost cell layer. All the cell layers may have the same structural parameter or different structural parameters. For example, all the cell layers in the cell may have the same thickness but different weights and areas. A related document of the battery pack 300 is consulted or a test is performed so that the preceding structural parameter can be obtained.

The electrical parameter of each cell layer may be used for calculating the energy consumption of the electric heating of each cell layer. The electrical parameter of each cell layer may include one or more of: a cell voltage and a current between cell layers. The cell voltage refers to a parallel voltage across the positive electrode of the cell 21 and the negative electrode of the cell 21. The wound cell is used as an example, all the cell layers are connected in parallel, and voltages across the positive electrodes of all the cell layers and the negative electrodes of all the cell layers are the same as each other. The current between the cell layers refers to a current between adjacent cell layers in the cell 21. The wound cell is used as an example, and the current between the cell layers includes a current between the first cell layer and the second cell layer, a current between the second cell layer and the third cell layer, and so on until a current between the second outermost cell layer and the outermost cell layer. All the cell layers may have the same electrical parameter or different electrical parameters. For example, all the cell layers in the cell may have the same voltage but different currents. A related document of the battery pack 300 is consulted or a test is performed so that the preceding electrical parameter can be obtained.

The environment heat transfer coefficient of each temperature measurement point may be used for calculating the energy consumption of heat transfer of the outermost cell layer within the range of the battery pack housing 10 to the external environment. All the temperature measurement points may have different environment heat transfer coefficients, and the preceding environment heat transfer coefficient can be obtained through simulation and deduction. In an optional implementation, the temperature of the whole cell 21 may be controlled to rise to a preset temperature, data about the change of the temperature of the cell and data about the change of the ambient temperature at each temperature measurement point are then recorded, and the environment heat transfer coefficient of each temperature measurement point is deduced from the data about the changes of the temperatures.

Considering that all the temperature measurement points have the environment heat transfer coefficients different from each other, for ensuring the accuracy of temperature measurement data, in an example, the controller 40 may determine the cell layer temperature of the target cell layer based on an ambient temperature at one temperature measurement point and the environment heat transfer coefficient of the temperature measurement point.

The wound cell is used as an example, and the controller 40 may acquire an ambient temperature at any temperature measurement point from the sensor 31, where the ambient temperature at this temperature measurement point and the environment heat transfer coefficient of this temperature measurement point are denoted by $T_m$ and $K$, respectively. It is assumed that the target cell layer is all the cell layers in each cell 21 in the cell group 20, all the cells 21 in the cell group 20 are at the same temperature and show the same temperature change, each cell 21 includes 18 cell layers, and a cell layer temperature of a j-th cell layer is denoted by $T^j$, where j denotes a natural number between 1 and 18. After acquiring the ambient temperature $T_m$, the controller 40 may determine a cell layer temperature $T^j$ of a j-th cell layer in each cell 21 in conjunction with the environment heat transfer coefficient $K$ of this temperature measurement point through a mathematical model in a form like $T^j = f_j(T_m, K)$, and cell layer temperatures of all the cell layers in each cell 21 are obtained finally.

In an example, the controller 40 may separately determine, based on an ambient temperature at each of the multiple temperature measurement points and the environment heat transfer coefficient of each of the multiple temperature measurement points, a respective reference cell layer temperature of the target cell layer which corresponds to each of the multiple temperature measurement points: and determine the cell layer temperature of the target cell layer based on reference cell layer temperatures which are in one-to-one correspondence with all of the multiple temperature measurement points.

The wound cell is used as an example, and the controller 40 may acquire ambient temperatures at multiple different temperature measurement points from the sensor 31. It is assumed that ambient temperatures at 5 temperature measurement points are acquired in total at present, and an ambient temperature at an i-th temperature measurement point and the environment heat transfer coefficient of the i-th temperature measurement point are denoted by $T_m^i$ and $K^i$, respectively, where i denotes a natural number between 1 and 5. It is assumed that the target cell layer may be all cell layers in a cell 21 that has the minimum average of the distances between the cell 21 and the preceding 5 temperature measurement points, the cell 21 includes 18 cell layers, a respective reference cell layer temperature of a j-th cell layer corresponding to an i-th temperature measurement point is denoted by $T_r^{ij}$, and a cell layer temperature of the j-th cell layer is denoted by $T^j$, where j denotes a natural number between 1 and 18.

After acquiring the ambient temperature $T_m^i$ at the i-th temperature measurement point, the controller 40 may determine, in conjunction with the environment heat transfer coefficient $K^i$ of the i-th temperature measurement point through a mathematical model in a form like

$$T_r^{ij} = f_j\left(T_m^i, K^i\right)$$, the reference cell layer temperature $T_r^{ij}$ of the j-th cell layer in the cell 21 corresponding to the i-th temperature measurement point, reference cell layer temperatures $T_r^{ij}$ of the j-th cell layer which are in one-to-one correspondence with the preceding 5 temperature measurement points are then obtained, and reference cell layer temperatures of each cell layer which are in one-to-one correspondence with the preceding 5 temperature measurement points are obtained finally. A first cell layer is used as an example below. The controller 40 has determined the reference cell layer temperatures

$$T_r^{11}, \ T_r^{21}, \ T_r^{31}, \ T_r^{41}, \text{and } T_r^{51}$$ that correspond to the preceding 5 temperature measurement points, respectively. Weighted calculation in a form like

$$T^j = \sum_{i=1}^{5} w_i * T_r^{ij}$$ may be performed on the 5 reference cell layer temperatures, where a weight $w_i$ of a reference cell layer temperature corresponding to the i-th temperature measurement point may be positively correlated with the distance between the temperature measurement point and the cell 21. A cell layer temperature $T^1$ of the first cell layer in the cell 21 is then obtained, and a cell layer temperature of each cell layer in the cell 21 is obtained finally. After determining the cell layer temperature of the target cell layer, the controller 40 may control the charging process of the battery pack 300 or the discharging process of the battery pack 300 based on the cell layer temperature of the target cell layer so that the controller 40 can precisely control the charging process of the battery pack 300 or the discharging process of the battery pack 300 with more accurate and comprehensive cell temperature measurement data.

In an example, the controller 40 may determine whether the cell layer temperature of the target cell layer is higher than or equal to a preset temperature threshold, and if yes, the controller 40 may control the battery pack 300 to cease to be charged or discharge the electricity.

In an example, the controller 40 may determine whether the cell layer temperature of the target cell layer is higher than or equal to a preset temperature threshold, and if yes, the controller 40 may control the battery pack 300 to be charged or discharge the electricity within a preset power threshold.

For example, each cell 21 in the cell group 20 is a wound cell. It is assumed that the target cell layer is a first cell layer in the wound cell 21. The controller 40 may determine whether a cell layer temperature of a first cell layer in each wound cell 21 exceeds the preset temperature threshold, and if yes, the controller 40 may control the battery pack 300 to cease to be charged or discharge the electricity or control the battery pack 300 to be charged or discharge the electricity within the preset power threshold. It is to be understood that ceasing to be charged or discharge the electricity or limiting charging power or discharging power is one of optional operations for controlling the charging process of the battery pack 300 or the discharging process of the battery pack 300. In another example, operations such as auxiliary cooling may be performed.

In an example, the controller 40 may further determine a working condition of the cell 21 based on the cell layer temperature of the target cell layer so that the controller 40 can determine the working condition of the cell 21 with more accurate and comprehensive cell temperature measurement data to effectively perform replacement in time.

For example, each cell 21 in the cell group 20 is a wound cell. It is assumed that the target cell layer is a first cell layer in the wound cell 21. The controller 40 may determine whether a cell layer temperature of a first cell layer in each wound cell 21 exceeds the preset temperature threshold and determine that the wound cell 21 the cell layer temperature of the first cell layer of which exceeds the preset temperature threshold has a poor working condition so that the controller 40 performs an operation on the wound cell 21 in the battery pack 300 such as replacement and elimination in the case where the number of wound cells 21 having the poor working condition exceeds a preset number threshold.

It is to be understood that using the cell layer temperature of the target cell layer to control the charging and discharging of the battery pack or determine the working condition is one of optional applications of the cell layer temperature of the target cell layer. In other examples, group arrangements of all the cells 21 in the cell group 20 may be adjusted based on the cell layer temperature of the target cell layer. Specifically, based on the distribution of cell layer temperatures of all the cell layers in each cell 21, an arrangement structure of all the cells 21 in the battery pack housing 10 may be determined, that is, it may be determined where all the cells 21 are specifically disposed in the battery pack housing 10 so that the heat dissipation and the like of the cell group 20 in the battery pack housing 10 are optimized.

It may be learned from the preceding description that in the present application, for the cell in the battery pack constituted by the multiple cell layers, the cell layer temperature of the target cell layer in the cell can be deduced from an ambient temperature at any temperature measurement point in the battery pack housing and then the charging and discharging of the battery pack can be controlled based on the cell layer temperature so that the obtained temperature measurement data is more accurate and comprehensive and the charging and discharging of the battery pack are controlled more precisely, thereby improving the working efficiency and service life of the battery pack and the working efficiency and service life of a power tool equipped with the battery pack.

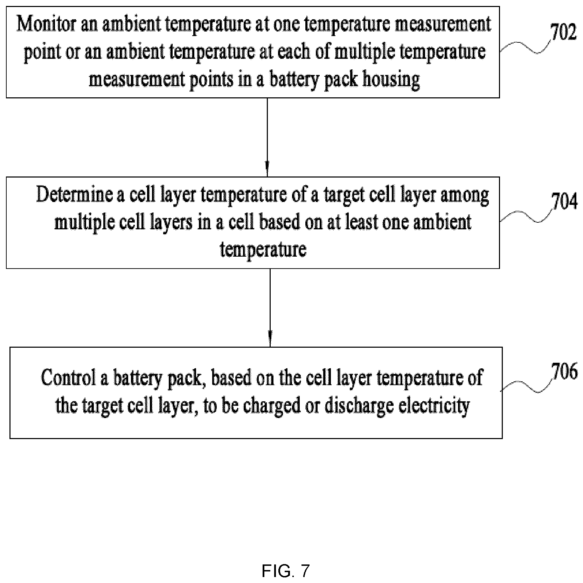

FIG. 7 shows a flowchart of a control method of a battery pack as an example in the present application. The control method of the battery pack includes the steps below.

In S702, an ambient temperature at one temperature measurement point or an ambient temperature at each of multiple temperature measurement points in a battery pack housing is monitored.

In S704, a cell layer temperature of a target cell layer among multiple cell layers in a cell is determined based on at least one ambient temperature.

In S706, the battery pack is controlled, based on the cell layer temperature of the target cell layer, to be charged or discharge electricity.

The basic principles, main features, and advantages of this application are shown and described above. It is to be understood by those skilled in the art that the aforementioned examples do not limit the present application in any form, and all technical solutions obtained through equivalent substitutions fall within the scope of the present application as defined in the appended claims.

**Claims**

1. A battery pack (300) for a power tool (100), comprising:

   a battery pack housing (10);
   a cell group (20) comprising a plurality of cells (21) and accommodated in the battery pack housing, wherein a cell among the plurality of cells comprises a plurality of cell layers (211);
   a monitoring device (30) configured to monitor a temperature at one temperature measurement point or a temperature at each of a plurality of temperature measurement points in the battery pack housing; and
   a controller (40) configured to control a charging process of the battery pack or a discharging process of the battery pack; **characterized in that**
   the monitoring device (30) configured to monitor an ambient temperature at one temperature measurement point or an ambient temperature at each of a plurality of temperature measurement points in the battery pack housing; and
   the monitoring device is further configured to transmit the monitored ambient temperature to the controller, and the controller is further configured to determine a cell layer temperature of a target cell layer among the plurality of cell layers in the cell based on at least one ambient temperature and control, based on the cell layer temperature of the target cell layer, the battery pack to be charged or discharge electricity.

2. The battery pack according to claim 1, wherein the controller is configured to determine the cell layer temperature of the target cell layer based on the at least one ambient temperature and at least one of a material parameter of the cell group, a structural parameter of the cell group, an electrical parameter of each cell layer, or an environment heat transfer coefficient of the one temperature measurement point or each of the plurality of temperature measurement points.

3. The battery pack according to claim 2, wherein the material parameter of the cell group comprises one or more of: a specific heat capacity of a cell or a heat transfer coefficient between cell layers.

4. The battery pack according to claim 2, wherein the structural parameter of the cell group comprises one or more of: a weight of each cell layer, an area of each cell layer, or a thickness of each cell layer.

5. The battery pack according to claim 2, wherein the electrical parameter of each cell layer comprises one or more of: a cell voltage or a current between cell layers.

6. The battery pack according to claim 1, wherein the one temperature measurement point or the plurality of temperature measurement points are at one or more of: an outer surface of any one of the plurality of cells, an inner surface of the battery pack housing, a cell bracket (22), and a cell connector (23).

7. The battery pack according to claim 1, wherein the controller is configured to determine the cell layer temperature of the target cell layer based on the ambient temperature at the one temperature measurement point and an environment heat transfer coefficient of the one temperature measurement point.

8. The battery pack according to claim 1, wherein the controller is configured to: separately determine, based on an ambient temperature at each of the plurality of temperature measurement points and an environment heat transfer coefficient of each of the plurality of temperature measurement points, a respective reference cell layer temperature of the target cell layer which corresponds to each of the plurality of temperature measurement points: and determine the cell layer temperature of the target cell layer based on reference cell layer temperatures which are in one-to-one correspondence with all of the plurality of temperature measurement points.

9. The battery pack according to claim 1, wherein the controller is configured to: separately determine, based on an ambient temperature at each of the plurality of temperature measurement points, a respective reference cell layer temperature of the target cell layer which corresponds to each of the plurality of temperature measurement points, and determine the cell layer temperature of the target cell layer based on preset weights of all of the plurality of temperature measurement points and reference cell layer temperatures at all of the plurality of temperature measurement points through weighted summation.

10. The battery pack according to claim 1, wherein the controller is further configured to determine a cell layer temperature of each cell layer in the cell based on the at least one ambient temperature.

11. The battery pack according to claim 1, wherein the controller is configured to control the battery pack to cease to be charged or discharge the electricity when the cell layer temperature of the target cell layer is higher than or equal to a preset temperature threshold.

12. The battery pack according to claim 1, wherein the controller is configured to control the battery pack to be charged or discharge the electricity within a preset power threshold when the cell layer temperature of the target cell layer is higher than or equal to a preset temperature threshold.

13. The battery pack according to claim 1, wherein the cell is a wound cell.

14. The battery pack according to claim 13, wherein the target cell layer is an innermost cell layer of the wound cell, and the controller is configured to control the battery pack to be charged or discharge the electricity within a preset power threshold when the cell layer temperature of the innermost cell layer of the wound cell is higher than or equal to a preset temperature threshold.

15. The battery pack according to claim 1, wherein the controller is further configured to determine a working condition of the cell based on the cell layer temperature of the target cell layer.

**Patentansprüche**

1. Batteriepaket (300) für ein Elektrowerkzeug (100), umfassend:

ein Batteriepaketgehäuse (10);
eine Zellgruppe (20) mit einer Mehrzahl von Zellen (21), die in dem Batteriepaketgehäuse aufgenommen ist, wobei eine Zelle der Mehrzahl von Zellen eine Mehrzahl von Zelllagen (211) umfasst;

eine Überwachungsvorrichtung (30), die dazu eingerichtet ist, eine Temperatur an einem Temperaturmesspunkt oder eine Temperatur an jeweils einem von mehreren Temperaturmesspunkten in dem Batteriepaketgehäuse zu überwachen; und

ein Steuergerät (40), das dazu eingerichtet ist, einen Ladevorgang des Batteriepakets oder einen Entladevorgang des Batteriepakets zu steuern; **dadurch gekennzeichnet, dass**

die Überwachungsvorrichtung (30) dazu eingerichtet ist, eine Umgebungstemperatur an einem Temperaturmesspunkt oder eine Umgebungstemperatur an jeweils einem von mehreren Temperaturmesspunkten in dem Batteriepaketgehäuse zu überwachen; und

die Überwachungsvorrichtung ferner dazu eingerichtet ist, die überwachte Umgebungstemperatur an das Steuergerät zu übertragen, und das Steuergerät ferner dazu eingerichtet ist, eine Zelllagentemperatur einer Zielzelllage aus der Mehrzahl von Zelllagen in der Zelle auf der Grundlage von wenigstens einer Umgebungstemperatur zu bestimmen und auf der Grundlage der Zelllagentemperatur der Zielzelllage zu steuern, dass das Batteriepaket geladen wird oder elektrische Energie abgibt.

2. Batteriepaket nach Anspruch 1, wobei das Steuergerät dazu eingerichtet ist, die Zelllagentemperatur der Zielzelllage auf der Grundlage der wenigstens einen Umgebungstemperatur und mindestens eines der folgenden Parameter zu bestimmen: eines Materialparameters der Zellgruppe, eines Strukturparameters der Zellgruppe, eines elektrischen Parameters jeder Zelllage oder eines Umgebungswärmeübergangskoeffizienten des einen Temperaturmesspunkts oder jedes der Mehrzahl von Temperaturmesspunkten.

3. Batteriepaket nach Anspruch 2, wobei der Materialparameter der Zellgruppe einen oder mehrere der folgenden Parameter umfasst: eine spezifische Wärmekapazität einer Zelle oder einen Wärmeübergangskoeffizienten zwischen Zelllagen.

4. Batteriepaket nach Anspruch 2, wobei der Strukturparameter der Zellgruppe einen oder mehrere der folgenden Parameter umfasst: ein Gewicht jeder Zelllage, eine Fläche jeder Zelllage oder eine Dicke jeder Zelllage.

5. Batteriepaket nach Anspruch 2, wobei der elektrische Parameter jeder Zelllage einen oder mehrere der folgenden Parameter umfasst: eine Zellspannung oder einen Strom zwischen Zelllagen.

6. Batteriepaket nach Anspruch 1, wobei der eine Temperaturmesspunkt oder die Mehrzahl von Temperaturmesspunkten an einem oder mehreren der folgenden Bereiche angeordnet ist/sind: einer Außenfläche einer beliebigen der Mehrzahl von Zellen, einer Innenfläche des Batteriepaketgehäuses, einem Zellhalter (22) und einem Zellverbinder (23).

7. Batteriepaket nach Anspruch 1, wobei das Steuergerät dazu eingerichtet ist, die Zelllagentemperatur der Zielzelllage auf der Grundlage der Umgebungstemperatur an dem einen Temperaturmesspunkt und eines Umgebungswärmeübergangskoeffizienten des einen Temperaturmesspunkts zu bestimmen.

8. Batteriepaket nach Anspruch 1, wobei das Steuergerät dazu eingerichtet ist, getrennt auf der Grundlage einer Umgebungstemperatur an jedem der Mehrzahl von Temperaturmesspunkten und eines Umgebungswärmeübergangskoeffizienten jedes der Mehrzahl von Temperaturmesspunkten eine jeweilige Referenzzelllagentemperatur der Zielzelllage zu bestimmen, die jeweils einem der Mehrzahl von Temperaturmesspunkten entspricht, und die Zelllagentemperatur der Zielzelllage auf der Grundlage von Referenzzelllagentemperaturen zu bestimmen, die in eine Eins-zu-Eins-Entsprechung mit sämtlichen der Mehrzahl von Temperaturmesspunkten gebracht sind.

9. Batteriepaket nach Anspruch 1, wobei das Steuergerät dazu eingerichtet ist, getrennt auf der Grundlage einer Umgebungstemperatur an jedem der Mehrzahl von Temperaturmesspunkten eine jeweilige Referenzzelllagentemperatur der Zielzelllage zu bestimmen, die jeweils einem der Mehrzahl von Temperaturmesspunkten entspricht, und die Zelllagentemperatur der Zielzelllage auf der Grundlage vorgegebener Gewichte aller der Mehrzahl von Temperaturmesspunkten und von Referenzzelllagentemperaturen an allen der Mehrzahl von Temperaturmesspunkten durch gewichtete Summation zu bestimmen.

10. Batteriepaket nach Anspruch 1, wobei das Steuergerät ferner dazu eingerichtet ist, eine Zelllagentemperatur jeder Zelllage in der Zelle auf der Grundlage der wenigstens einen Umgebungstemperatur zu bestimmen.

11. Batteriepaket nach Anspruch 1, wobei das Steuergerät dazu eingerichtet ist, den Ladevorgang des Batteriepakets oder den Entladevorgang des Batteriepakets zu beenden, wenn die Zelllagentemperatur der Zielzelllage höher als oder gleich einem vorgegebenen Temperaturgrenzwert ist.

**12.** Batteriepaket nach Anspruch 1, wobei das Steuergerät dazu eingerichtet ist, zu steuern, dass das Batteriepaket innerhalb eines vorgegebenen Leistungsgrenzwerts geladen wird bzw. elektrische Energie abgibt, wenn die Zelllagentemperatur der Zielzelllage höher als oder gleich einem vorgegebenen Temperaturgrenzwert ist.

**13.** Batteriepaket nach Anspruch 1, wobei die Zelle eine Wickelzelle ist.

**14.** Batteriepaket nach Anspruch 13, wobei die Zielzelllage eine innerste Zelllage der Wickelzelle ist, und wobei das Steuergerät dazu eingerichtet ist, zu steuern, dass das Batteriepaket innerhalb eines vorgegebenen Leistungsgrenzwerts geladen wird bzw. elektrische Energie abgibt, wenn die Zelllagentemperatur der innersten Zelllage der Wickelzelle höher als oder gleich einem vorgegebenen Temperaturgrenzwert ist.

**15.** Batteriepaket nach Anspruch 1, wobei das Steuergerät ferner dazu eingerichtet ist, einen Betriebszustand der Zelle auf der Grundlage der Zelllagentemperatur der Zielzelllage zu bestimmen.

## Revendications

**1.** Bloc de batteries (300) pour un outil électrique (100), comprenant :

un boîtier de bloc de batteries (10) ;
un groupe de cellules (20) comprenant une pluralité de cellules (21) et logé dans le boîtier de bloc de batteries, une cellule parmi la pluralité de cellules comprenant une pluralité de couches de cellule (211) ;
un dispositif de surveillance (30) configuré pour surveiller une température en un point de mesure de température ou une température en chacun d'une pluralité de points de mesure de température dans le boîtier de bloc de batteries ; et
un module de commande (40) configuré pour commander un processus de charge du bloc de batteries ou un processus de décharge du bloc de batteries ; **caractérisé en ce que**
le dispositif de surveillance (30) est configuré pour surveiller une température ambiante en un point de mesure de température ou une température ambiante en chacun d'une pluralité de points de mesure de température dans le boîtier de bloc de batteries ; et
le dispositif de surveillance est en outre configuré pour transmettre la température ambiante surveillée au module de commande, et le module de commande est en outre configuré pour déterminer une température de couche de cellule d'une couche de cellule cible parmi la pluralité de couches de cellule de la cellule sur la base d'au moins une température ambiante et, sur la base de la température de couche de cellule de la couche de cellule cible, commander que le bloc de batteries soit chargé ou décharge de l'électricité.

**2.** Bloc de batteries selon la revendication 1, dans lequel le module de commande est configuré pour déterminer la température de couche de cellule de la couche de cellule cible sur la base de ladite au moins une température ambiante et d'au moins l'un parmi : un paramètre de matériau du groupe de cellules, un paramètre structurel du groupe de cellules, un paramètre électrique de chaque couche de cellule, ou un coefficient de transfert de chaleur ambiant dudit point de mesure de température ou de chacun de la pluralité de points de mesure de température.

**3.** Bloc de batteries selon la revendication 2, dans lequel le paramètre de matériau du groupe de cellules comprend un ou plusieurs des éléments suivants : une capacité calorifique spécifique d'une cellule ou un coefficient de transfert de chaleur entre des couches de cellule.

**4.** Bloc de batteries selon la revendication 2, dans lequel le paramètre structurel du groupe de cellules comprend un ou plusieurs des éléments suivants : un poids de chaque couche de cellule, une surface de chaque couche de cellule, ou une épaisseur de chaque couche de cellule.

**5.** Bloc de batteries selon la revendication 2, dans lequel le paramètre électrique de chaque couche de cellule comprend un ou plusieurs des éléments suivants : une tension de cellule ou un courant entre des couches de cellule.

**6.** Bloc de batteries selon la revendication 1, dans lequel ledit point de mesure de température ou ladite pluralité de points de mesure de température se situe sur un ou plusieurs des éléments suivants : une surface extérieure de l'une quelconque de la pluralité de cellules, une surface intérieure du boîtier de bloc de batteries, un support de cellule (22) et un connecteur de cellule (23).

**7.** Bloc de batteries selon la revendication 1, dans lequel le module de commande est configuré pour déterminer la température de couche de cellule de la couche de cellule cible sur la base de la température ambiante au seul point de mesure de température et d'un coefficient de transfert de chaleur ambiant de ce point de mesure de température.

8. Bloc de batteries selon la revendication 1, dans lequel le module de commande est configuré pour déterminer séparément, sur la base d'une température ambiante à chacun de la pluralité de points de mesure de température et d'un coefficient de transfert de chaleur ambiant de chacun de la pluralité de points de mesure de température, une température de couche de cellule de référence respective de la couche de cellule cible correspondant à chacun de la pluralité de points de mesure de température, et pour déterminer la température de couche de cellule de la couche de cellule cible sur la base de températures de couche de cellule de référence qui sont en correspondance univoque avec l'ensemble de la pluralité de points de mesure de température.

9. Bloc de batteries selon la revendication 1, dans lequel le module de commande est configuré pour déterminer séparément, sur la base d'une température ambiante à chacun de la pluralité de points de mesure de température, une température de couche de cellule de référence respective de la couche de cellule cible correspondant à chacun de la pluralité de points de mesure de température, et pour déterminer la température de couche de cellule de la couche de cellule cible sur la base de poids prédéfinis de l'ensemble de la pluralité de points de mesure de température et de températures de couche de cellule de référence à l'ensemble de la pluralité de points de mesure de température, au moyen d'une sommation pondérée.

10. Bloc de batteries selon la revendication 1, dans lequel le module de commande est en outre configuré pour déterminer une température de couche de cellule de chaque couche de cellule de la cellule sur la base de ladite au moins une température ambiante.

11. Bloc de batteries selon la revendication 1, dans lequel le module de commande est configuré pour commander que le bloc de batteries cesse d'être chargé ou de décharger de l'électricité lorsque la température de couche de cellule de la couche de cellule cible est supérieure ou égale à un seuil de température prédéfini.

12. Bloc de batteries selon la revendication 1, dans lequel le module de commande est configuré pour commander que le bloc de batteries soit chargé ou décharge de l'électricité à une puissance ne dépassant pas un seuil de puissance prédéfini lorsque la température de couche de cellule de la couche de cellule cible est supérieure ou égale à un seuil de température prédéfini.

13. Bloc de batteries selon la revendication 1, dans lequel la cellule est une cellule enroulée.

14. Bloc de batteries selon la revendication 13, dans lequel la couche de cellule cible est une couche de cellule la plus interne de la cellule enroulée, et dans lequel le module de commande est configuré pour commander que le bloc de batteries soit chargé ou décharge de l'électricité à une puissance ne dépassant pas un seuil de puissance prédéfini lorsque la température de couche de cellule de la couche de cellule la plus interne de la cellule enroulée est supérieure ou égale à un seuil de température prédéfini.

15. Bloc de batteries selon la revendication 1, dans lequel le module de commande est en outre configuré pour déterminer un état de fonctionnement de la cellule sur la base de la température de couche de cellule de la couche de cellule cible.

FIG. 1

FIG. 2

FIG. 3

FIG. 4

FIG. 5

FIG. 6

Monitor an ambient temperature at one temperature measurement point or an ambient temperature at each of multiple temperature measurement points in a battery pack housing — 702

Determine a cell layer temperature of a target cell layer among multiple cell layers in a cell based on at least one ambient temperature — 704

Control a battery pack, based on the cell layer temperature of the target cell layer, to be charged or discharge electricity — 706

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114788068
- US 2022374568 A